# EUROPEAN PATENT APPLICATION

(11) **EP 0 872 634 A1**
(43) Date of publication of application: **21.10.1998**
(21) Application number: 97106327.6
(22) Date of filing: 17.04.1997
(51) Int. Cl.: F02D 41/00, F02D 41/28, F02D 19/06

(54) **Method and apparatus for feeding internal combustion engines with gaseous fuels**

(71) Applicant: Bianchi, Marco, 42016 Guastalla (Reggio Emilia) (IT)
(72) Inventor: Bianchi, Marco, 42016 Guastalla (Reggio Emilia) (IT)
(74) Representative: Rinaldi, Carlo

(57) **Abstract**

An apparatus for feeding internal combustion engines with gaseous fuels comprises the following components: an internal combustion engine (1) fed by a gaseous fuel feeding system (15,16,17,20) and/or a liquid fuel feeding system (11,12), the feeding system (11,12) comprising an electronic control unit (11) capable of controlling the liquid fuel injecting valves (12), control unit (11) the engine operating diagrams defined by the maker of the vehicle being stored in said electronic control unit (11); a central control unit (13) capable of controlling the gaseous fuel injecting valves (15); an electrical component (14) connecting the electronic control unit (11) to the central control unit (13); an adaptive network (14) changing the electrical quantities coming from the electronic control unit (11) into electrical quantities capable of being processed by the central control unit (13).

## Description

### BACKGROUND OF THE INVENTION

The present invention relates to a method for feeding internal combustion engines with gaseous fuels at constant pressure; more precisely, the invention relates to a method for controlling the feeding with fuels in the gaseous phase (l.p.g. or methane) of engines fed by a central control unit controlling as many injection valves as the combustion chambers of said engines are.

In addition, the invention refers to an apparatus capable of realising said method.

### STATE OF THE TECHNIQUE

The current methods for feeding internal combustion engines with gaseous fuels at constant pressure are based on engine operating diagrams obtained, during the apparatus tuning, by analysing numerous engine operating conditions. A central control unit stores the operating diagrams and controls the gaseous fuel injecting valves considering the value corresponding to the actual operating condition defined by the diagrams.

The diagrams stored by the central control unit consist of an aggregate of curves in n dimensions defined on the basis of the different engine operating conditions; the operating conditions considered are the applied load, the engine angular speed, the type of engine operating condition (idling, accelerating or decelerating phases, full load), the engine thermal state, the environmental temperature and pressure, the values of the oxygen sensors signals and the like.

Therefore, the current apparatuses for feeding the engines with gaseous fuels comprise a central control unit connected to the various sensors which measure said engine operating conditions, the central control unit acting on the gaseous fuel injecting valves without considering the functioning of the electronic control unit usually supplied to the vehicle, wherein the electronic control unit controls the liquid fuel injecting valves when the engine is fed by this fuel.

Substantially, the methods and, consequently, the current apparatuses present the following defects:
A- The diagrams stored by the central control unit are defined for each vehicle during the tuning phase of the gas delivering apparatus without considering the diagrams already stored in the electronic control unit of the liquid fuel injecting valves originally installed in the vehicle.
B- During the feeding of the engine with the gaseous fuel the electronic control unit does not act on the liquid fuel injecting valves, since, in this case, the same injecting valves do not feed the engine.
C- During the feeding of the engine with the gaseous fuel the electronic control unit limits its functioning to define the engine ignition sequences; it controls the liquid fuel injecting valves again if the gas delivering apparatus fails.

### AIM OF THE INVENTION

The purpose of this invention is to remedy these defects. The invention, as claimed, solves the problem of creating a method for feeding internal combustion engines with gaseous fuels; according to this method, the central control unit of the gaseous fuel injecting valves uses the engine operating diagrams defined by the maker of the vehicle, stored in the electronic control unit of the liquid fuel injecting valves, and approved in compliance with the regulations in force, in order to correctly control the gaseous fuel injecting valves in any engine operating condition.

Essentially, the method according to the present invention consists in the electronic control unit processing operative signals for the liquid fuel injecting valves on the basis of the engine operating diagrams, therefore sending said operative signals to the central control unit of the gaseous fuel injecting valves; the central control unit changes the same signals into operative signals for said gaseous fuel injecting valves.

In this way, the data stored in the electronic control unit are used; said data are changed by the central control unit to obtain operative signals for the gaseous fuel injecting valves without interfering with the functioning of the electronic control unit of the liquid fuel injecting valves.

Advantageously, the method consists in using the operative signals sent by the electronic control unit to a selected liquid fuel injecting valve to obtain electrical quantities to be sent to the central control unit which processes said electrical quantities in order to obtain operative signals for the gaseous fuel injecting valves.

A second aim of the present invention is the creating of an apparatus capable of realising said method; for this reason, the apparatus essentially comprises the following components: an electronic control unit capable of controlling the liquid fuel injecting valves, the operating diagrams defined by the maker of the vehicle being stored in the electronic control unit; a central control unit capable of controlling the gaseous fuel injecting valves; an electrical component connecting the electronic control unit to the central control unit; an adaptive network providing to change the electrical quantities coming from the electronic control unit into electrical quantities capable of being processed by the central control unit for acting on the gaseous fuel injecting valves.

The apparatus according to the present invention comprises at least an interface and commutation network connected to the inlet of a selected liquid fuel injecting valve; the output signals of the central control unit controlling the gaseous fuel injecting valves are processed by said central control unit considering the value of the signal sent to the selected liquid fuel injecting valve.

### BRIEF DESCRIPTION OF THE DRAWINGS

Other advantages, features and aims of the invention, may be more readily understood by referring to the accompanying drawings, which concern a preferred embodiment, in which:
Fig.1 represents an apparatus capable of realizing the method according to the invention;
Fig.2 is a block diagram of the apparatus;
Fig.3 is a block diagram of the central control unit.

### DESCRIPTION OF A PREFERRED EMBODIMENT OF THE APPARATUS

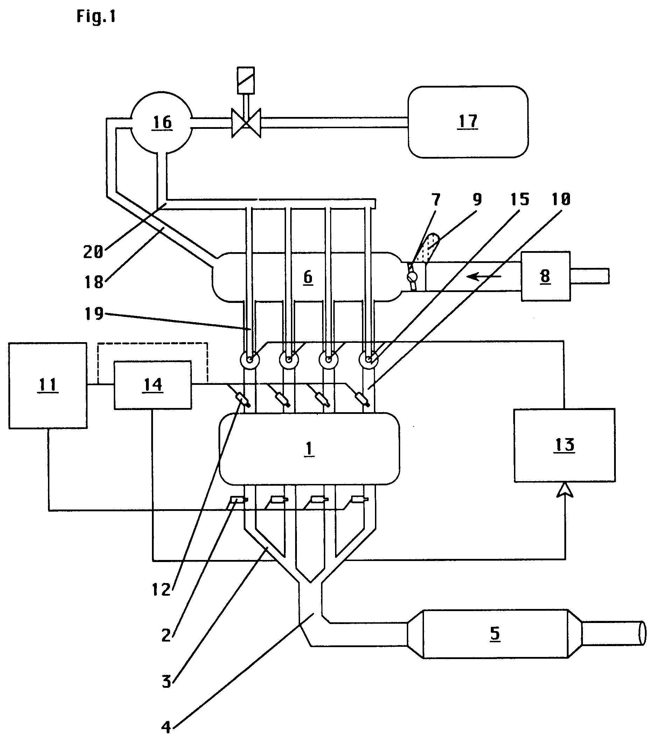

The apparatus of Fig.1 comprises an internal combustion engine 1 and an oxygen sensor 2 located in at least one exhaust pipe 3 of one combustion chamber; the oxygen sensor signal presenting two values which indicate, respectively, a lean and a rich mixture strength. The exhaust pipes 3 flow into an exhaust manifold 4 fitted with a catalytic muffler 5, inside the muffler 5 the reactions of oxidisation-reduction taking place to reduce the pollutants coming out of the engine 1.

In addition, the engine 1 presents an intake manifold 6 fitted with a body which houses a throttle valve 7, a filter 8 for the air sucked by the combustion chambers, a tie-rod of an accelerator 9 for manoeuvring the throttle valve 7, a cooling system, a system for feeding the engine 1 with liquid fuel and other devices or mechanical elements (not shown in this figure) which are usually installed in the current internal combustion engines for motor-vehicles.

The intake manifold 6 branches in four intake lines 10, each of which feeds its own combustion chamber.

The liquid fuel feeding apparatus comprises an electronic control unit 11 originally installed in the vehicle, a tank for the liquid fuel and other components usually used in the current engines for motor-vehicles; the electronic control unit 11 controls the liquid fuel injecting valves 12 when the engine 1 is fed by this fuel.

An apparatus for feeding the engine 1 with a gaseous fuel comprises a central control unit 13, the inlet of which is connected to an interface and commutation network 14 capable of changing the signals of the electronic control unit 11 into electrical quantities suitable for the networks and electronic components of the central control unit 13; the outlets of the central control unit 13 are connected to four gaseous fuel injecting valves 15.

A pressure reducer 16 is connected to a tank 17 for the gaseous fuel and to four gaseous fuel injecting valves 15; the pressure reducer 16 is further connected to the intake manifold 6 by means of a compensating line 18 for compensating the pressure changes taking place in the intake manifold 6. A canalisation 19 connects each gaseous fuel injecting valve 15 to an outlet pipe 20 of the pressure reducer 16. Finally, the tank 17 is fitted with a gas level or pressure sensor measuring the fuel quantity inside the tank 17.

The gaseous fuel injecting valves 15 are electromagnetic injecting valves connected to the central control unit 13; the opening starting instant and length of the injection of each valve 15 are defined by the central control unit 13 on the basis of the operative signals processed by the electronic control unit 11 controlling the liquid fuel injecting valves 12.

In addition to the oxygen sensors 2, other sensors are provided measuring the main engine operating conditions: the sucked air flow-rate and temperature, the throttle valve angular position, the cooling water temperature, the vacuum in the intake manifold 6 downstream of the throttle valve 7, the engine angular speed; said sensors being connected to the electronic control unit 11 acting, in every instant, on the liquid fuel injecting valves 12 in accordance with the engine operating conditions measured by said sensors.

In fact, the electronic control unit 11 processes the values of the engine operating conditions measured by said sensors considering the engine operating diagrams; the result of the processing consists in an operative signal defining the opening starting instant and length of the injection of each liquid fuel injecting valve 12.

The interface and commutation network 14 is used for feeding the engine 1 with the gaseous fuel, said network 14 helps to send the operative signals processed by the electronic control unit 11 to the central control unit 13. The interface and commutation network 14 is fitted with electrical components reproducing the electrical characteristics (impedance and the like) of the liquid fuel injecting valves 12. The interface and commutation network 14 is used for negating the functioning of the liquid fuel injecting valves 12 and for using the signal of one or more liquid fuel injecting valves 12 for the calculation of the opening starting instant and length of the injection of each gaseous fuel injecting valve 15; the calculation being executed by the central control unit 13.

Advantageously, the interface and commutation network 14 is connected to the inlet of a selected liquid fuel injecting valve 12 to obtain an easy economical central control unit 13; the outlet signals of the central control unit 13 for the functioning of the gaseous fuel injecting valves 15 are processed by said central control unit 13 considering the value of the signal sent to the selected liquid fuel injecting valve.

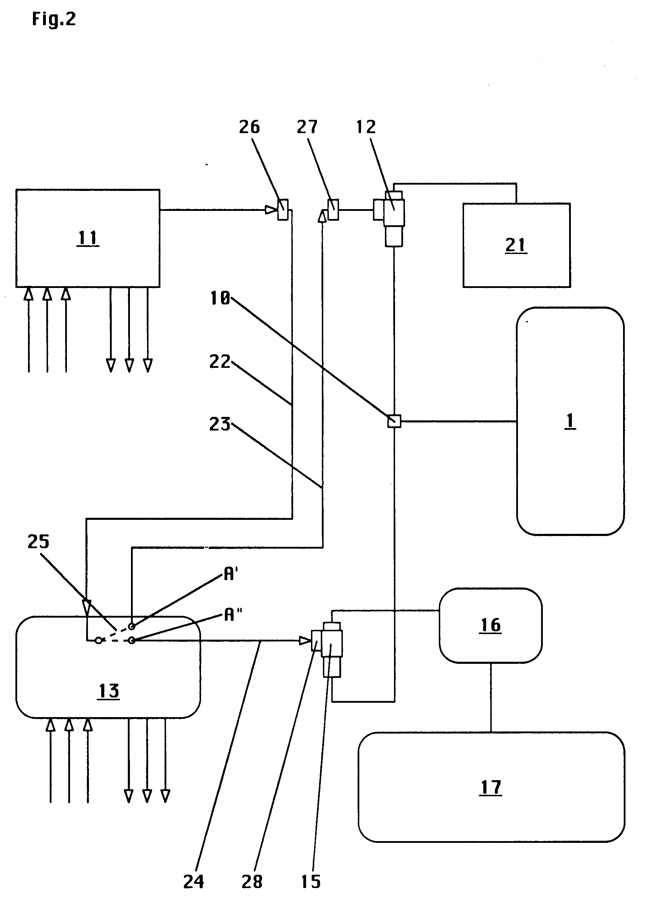

The gas feeding apparatus is also schematically shown in Fig.2; the apparatus presents a tank 21 for the liquid fuel connected to the liquid fuel injecting valves 12 feeding the engine 1. The liquid fuel injecting valves 12 are electrically connected to the electronic control unit 11 by means of wires 22, 23, while a wire 24 connects the central control unit 13 to the gaseous fuel injecting valves 15. A commutator 25 enables the sending of the operative signals processed by the electronic control unit 11 to the liquid fuel injecting valves 12 directly, or to the gaseous fuel injecting valves 15 when the gaseous fuel is used; in this case said operative signals are processed by the central control unit 13 for adapting said signals to the physical characteristics of the gaseous fuel (pressure, density, viscosity, heat of reaction, etc.) and to the mechanical (flow-rate, inertia) and electrical (impedance) characteristics of the gaseous fuel injecting valves 15

Therefore, when the commutator 25 is in the position A', the electronic control unit 11 sends the operative signals directly to the liquid fuel injecting valves 12; vice-versa, when the commutator 25 is in the position A'', the electronic control unit 11 sends the operative signals, only of a selected liquid fuel injecting valve 12 preferably, to the central control unit 13 which changes said signals into operative signals for the gaseous fuel injecting valves 15. The interface and commutation network 14 operates a function analogous to that of the commutator 25.

Adaptive electrical components 26, 27, 28 are provided at the outlet of the electronic control unit 11 and the inlets of both the liquid fuel injecting valves 12 and gaseous fuel injecting valves 15 for adapting the electrical characteristics of the operative signals to the mechanical characteristics of the injecting valves relevant to both feeding systems.

In this case the commutator 25 therefore replaces the interface and commutation network 14.

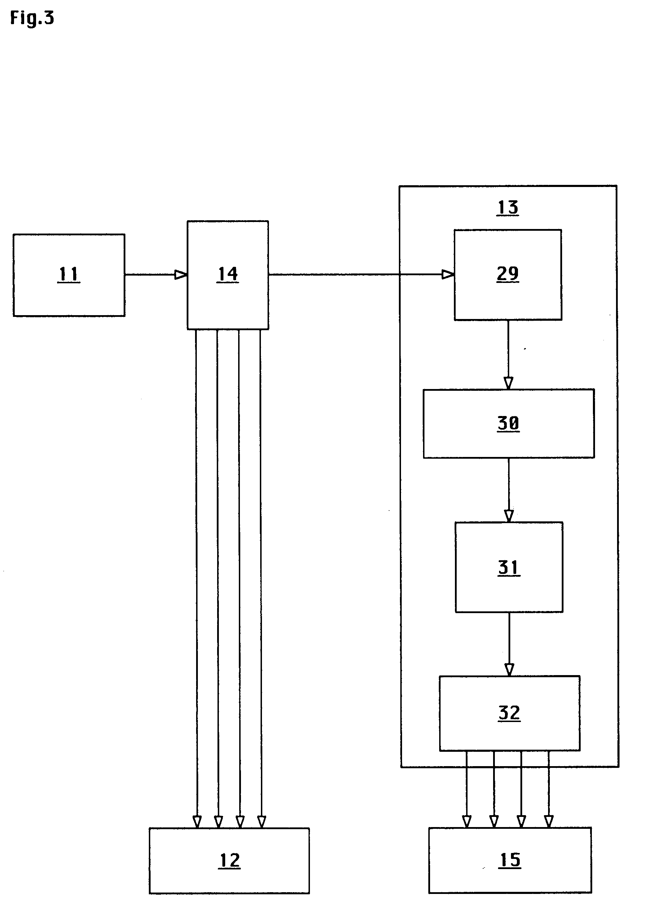

The central control unit 13 shown in Fig.3 comprises an analogue/digital changing network 29 having the function of changing the analogue signal processed by the electronic control unit 11 into a digital signal; the analogue signal is sent by the electronic control unit 11 to the central control unit 13 through the interface and commutation network 14. The signal changed by the changing network 29 is sent to a microprocessor 30 processing said changed signal on the basis of calculation algorithms enabling the microprocessor 30 to obtain a digital signal the value of which depends on the value of the signal processed by the electronic control unit 11, the characteristics of the gaseous fuel together with the electrical and mechanical characteristics of the gaseous fuel injecting valves 15.

The microprocessor 30 is connected to a digital/analogue changing network 31 which changes the digital signal processed by the microprocessor 30 into an analogue signal to be sent to a power stage 32 supplying the power required by the central control unit 13 to execute the processing of the electrical quantities; the power stage 32 is capable of adapting the operative analogue signals coming from the changing network 31 for acting on the gaseous fuel injecting valves 15, to which said power stage 32 is electrically connected.

## Claims

1. Method for feeding internal combustion engines with gaseous fuels essentially consisting in the electronic control unit (11) processing operative signals for the liquid fuel injecting valves (12) on the basis of engine operating diagrams therefore sending said operative signals to the central control unit (13) of the gaseous fuel injecting valves (15); the central control unit (13) changes the same signals into operative signals for said gaseous fuel injecting valves (15).

2. Method for feeding as in claim 1, consisting in using the operative signals sent by the electronic control unit (11) to a selected liquid fuel injecting valve (12) to obtain electrical quantities to be sent to the central control unit (13) which processes said electrical quantities to obtain operative signals for the gaseous fuel injecting valves (15).

3. An apparatus capable of realising the method of claims 1 and 2, characterised by the fact that the apparatus comprises the following components: an internal combustion engine (1) fed by a gaseous fuel feeding system (15,16,17,20) and/or a liquid fuel feeding system (11,12,21), the system (11,12,21) comprising an electronic control unit (11) capable of controlling the liquid fuel injecting valves (12), the engine operating diagrams defined by the maker of the vehicle being stored in said electronic control unit (11); a central control unit (13) capable of controlling the gaseous fuel injecting valves (15); an electrical component (14,25) connecting the electronic control unit (11) to the central control unit (13); an adaptive network (14) changing the electrical quantities coming from the electronic control unit (11) into electrical quantities capable of being processed by the central control unit (13).

4. An apparatus as in claim 3, wherein an interface and commutation network (14) is connected to the inlet of the liquid fuel injecting valves (12); the outlet signals of the central control unit (13) controlling the injecting valves (15) are processed by said central control unit (13) considering the value of the signal sent to a selected liquid fuel injecting valve (12), the characteristics of the gaseous fuel together with the physical and mechanical characteristics of the gaseous fuel injecting valves (15).

5. An apparatus as in claim 3, wherein the central control unit (13) comprises the following electrical components: an analogue/digital changing network (29) having the function of changing the analogue signal processed by the electronic control unit (11) into a digital signal; the analogue signal being sent by the electronic control unit (11) to the central control unit (13) through the interface and commutation network (14); the signal changed by the changing network (29) being sent to a microprocessor (30) which processes said changed signal on the basis of calculation algorithms enabling the microproccssor (30) to obtain a digital signal, the value of which depends on the value of the signal processed by the electronic control unit (11), the characteristics of the gaseous fuel and the electrical and mechanical characteristics of the gaseous fuel injecting valves (15).

6. An apparatus as in claim 5, wherein the microprocessor (30) is connected to a digital/analogue changing network (31) which changes the digital signal processed by the microprocessor (30) into an analogue signal to be sent to a power stage (32).

7. An apparatus as in claim 6, wherein the power stage (32) supplies the power required by the central control unit (13) to execute the processing of the electrical quantities; the power stage (32) being capable of adapting the operative analogue signals coming from the changing network (31) for acting on the gaseous fuel injecting valves (15), to which said power stage (32) is electrically connected.

8. An apparatus as in claim 3, wherein a commutator (25) is provided which enables the sending of the operative signals processed by the electronic control unit (11) to the liquid fuel injecting valves (12) directly, or to the gaseous fuel injecting valves (15) when the engine (1) is fed by the gaseous fuel; in this case said operative signals is processed by the central control unit (13) for adapting said signals to the physical characteristics of the gaseous fuel and the gaseous fuel injecting valves (15).

9. An apparatus as in claim 8, wherein , when the commutator (25) is in a first position (A'), the electronic control unit (11) sends the operative signals directly to the liquid fuel injecting valves (12); vice-versa, when the commutator (25) is in a second position (A''), the unit electronic of control (11) sends the operative signals to the central control unit (13) which changes said signals into operative signals for the gaseous fuel injecting valves (15).

10. An apparatus as in claim 9, wherein, when the commutator (25) is in the second position (A''), the electronic control unit (11) sends the operative signals of a selected liquid fuel injecting valve (12) to the central control unit (13) which changes said signals into operative signals for the gaseous fuel injecting valves (15).
